(19) Europäisches Patentamt
European Patent Office
Office européen des brevets

(11) EP 1 647 588 A2

(12) EUROPEAN PATENT APPLICATION

(43) Date of publication:
19.04.2006 Bulletin 2006/16

(21) Application number: 05256238.6

(22) Date of filing: 06.10.2005

(51) Int Cl.:
*C09J 201/02* (2006.01) *C09D 4/00* (2006.01)
*C09D 11/02* (2006.01) *C09D 5/00* (2006.01)

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: 13.10.2004 US 618380 P

(71) Applicant: **Rohm and Haas Company**
**Philadelphia, PA 19106-2399 (US)**

(72) Inventors:
- **Kauffman, Thomas Frederick**
**Harleysville**
**Pennsylvania 19438 (US)**
- **Whitman, David William**
**Harleysville**
**Pennsylvania 19438 (US)**
- **Zajackowski, Michael John**
**New Holland**
**Pennsylvania 17557-1433 (US)**

(74) Representative: **Kent, Venetia Katherine et al**
**Rohm and Haas (UK) Ltd**
**European Patent Department**
**28th. Floor, City Point**
**One Ropemaker Street**
**London EC2Y 9HS (GB)**

# (54) Surface promoted Michael Cure Compositions

(57) A curable composition comprising: at least one multi-functional Michael donor, at least one multi-functional Michael acceptor, and at least one reaction promoter, wherein the at least one reaction promoter is applied to at least one substrate or is included in one or more compositions applied to at least one substrate.



Printed by Jouve, 75001 PARIS (FR)

## Description

This invention relates to curable compositions which are useful as adhesives, sealants, foams, elastomers, films and coatings, polymer compositions derived from the curable compositions, a method of making the polymer compositions, methods of using the curable compositions, and articles prepared from the curable compositions.

In particular, the invention is directed to curable compositions having long pot lives and short cure times. The curable compositions include a multifunctional Michael donor component, a multifunctional Michael acceptor component and at least one reaction promoter, wherein at least a portion of the reaction promoter is present on at least one surface to which compositions are in contact. Upon contact with the surface containing the reaction promoter, the composition cures via the catalyzed carbon Michael addition reaction.

Adhesives, sealants, foams, elastomers, films and other coatings are typically made from lower molecular weight precursors which upon curing increase in molecular weight via polymerization or crosslinking.

U.S. Patent No. 5,219,958 describes the use of blocked catalysts to delay cure. This technology is limited, however, in that it requires drying to remove a volatile organic compound.

U. S. Pat. No. 5,945,489 discloses oligomers derived from a carbon Michael reaction but the ultimate curing of these materials occurs via free radical radiation initiated process. This technology is limited, however, in that it requires UV radiation for curing which can not be accomplished through opaque or printed substrates.

It is therefore desirable to provide new curable compositions that do not require drying or require radiation, can be cured rapidly and have long pot life, and can be cured when placed between opaque or printed substrates. These curable compositions comprise a multifunctional Michael donor component and a multifunctional Michael acceptor component and at least one reaction promoter, wherein at least a portion up to all of the reaction promoter is present on at least one substrate surface to which compositions come into contact.

Inventors have discovered curable compositions which have long pot lives and short cure times. Moreover, the pot life and cure time of such curable compositions can be independently adjusted. The curable compositions are prepared using at least one reaction promoter. A reaction promoter as used herein is either a substance that catalyzes or co-catalyzes carbon based Michael addition for rapidly curing the curable compositions and/or acts as an acid scavenger to overcome acid inhibition. Certain acid scavengers can also function as catalysts. Inventors have found that some surfaces inherently contain reaction promoting functional groups or that such groups may be introduced via chemical or physical treatments.

It is understood by those having ordinary skill in the art that for traditional multi-component thermoset compositions pot life and cure time are usually strongly interrelated, so that improvements in pot life are accompanied by poorer cure time, and improvements in cure time are accompanied by poorer pot life. This interrelationship is due to the common underlying process driving the two factors: increase in molecular weight of the thermoset composition.

As would be expected by one well versed in the art , removing some or all of a reaction promoting ingredient from a curable composition will increase pot life, because the molecular weight build responsible for viscosity increase is slowed, either by lower catalyst level or increased acid inhibition.

In the absence of any other change, cure time is increased as well. However, the inventors have discovered that in the case of relatively thin coatings, it is possible to prepare substrate surfaces which contain sufficient reaction promoting ingredients to Michael cure a thermoset composition brought into contact with the prepared substrate.

At least one surface includes a portion up to all of at least one reaction promoter to which curable compositions come in contact. The surface containing the reaction promoter may also optionally contain a portion up to all Michael donors or acceptors. At least one of the reaction promoters may be included in the native composition of the substrate, is incorporated in to at least one substrate by one or more chemical treatments, and/or is incorporated into at least one substrate by one or more physical treatments. In addition, the reaction promoter may be included in compositions, including inks, applied as a coating to at least one substrate.

Accordingly, the present invention provides curable compositions comprising: at least one multi-functional Michael donor, at least one multi-functional Michael acceptor, and at least reaction promoter, wherein the at least one reaction promoter is present on a surface to which the compositions come in contact. According to one embodiment, the reaction promoter is selected from one or more of a catalyst, a co-catalyst and an acid scavenger. According to another embodiment the at least one reaction promoter is contained within a primer or an ink or alternatively the primer or the ink is inherently a reaction promoter.

The present invention provides a laminate comprising: at least two substrates in contact with the reaction product of at least one multi-functional Michael donor, at least one multi-functional Michael acceptor, wherein at least one reaction promoter is present on the surface of at least one of the substrates prior to lamination. The present invention also provides that the at least one reaction promoter may be contained within a primer or an ink or the primer or the ink is inherently a reaction promoter. The present invention also provides a method for forming a laminate comprising the steps of coating at least one side of at least one substrate with a curable composition comprising at least one multi-functional Michael donor, at least one multi-functional Michael acceptor, and allowing the curable composition to cure wherein

at least one reaction promoter is present on the surface of at least one of the substrates prior to lamination.

The present invention also provides an article wherein at least a portion of the article's surface is in contact with the reaction product of at least one multi-functional Michael donor, at least one multi-functional Michael acceptor, wherein a reaction promoter is present on the article's surface prior to the reaction of the Michael donor and acceptor. The present invention also provides that the at least one reaction promoter may be contained within a primer or an ink or the primer or the ink is inherently a reaction promoter. The present invention also provides a method for making such an article by applying to a portion of a surface a curable composition comprising at least one multi-functional Michael donor, at least one multi-functional Michael acceptor, and curing wherein a reaction promoter is present on the article's surface prior to the cure.

The present invention also provides a substrate comprising at least one reaction promoter incorporated into the substrate during manufacture of the substrate, or coating the substrate with a curable composition including at least one reaction promoter, or by subjecting the substrate to at least one process that generates or incorporates a reaction promoter on its surface. The present invention also provides that the at least one reaction promoter may be contained within a primer or an ink or the primer or the ink is inherently a reaction promoter.

The present invention also provides an ink, primer or coating which contains a reaction promoter. The present invention also provides an ink, primer or coating which contains a catalyst. The present invention also provides an ink, primer or coating which contains a co-catalyst. The present invention also provides an ink, primer or coating which contains an acid scavenger.

The present invention also provides a method for preparing a polymer comprising the steps of contacting at least one substrate with a curable composition comprising at least one multi-functional Michael donor and at least one multi-functional Michael acceptor and allowing the curable composition to cure wherein at least one reaction promoter is present on the surface of the at least one substrate prior to the cure.

As used herein, the term reaction promoter refers to any compound capable of allowing the reactants of the invention to proceed to products of the invention and includes, but is not limited to for example, one or more of a catalyst, a co-catalyst, an acid scavenger and combinations thereof.

As used herein, a catalyst is a substance which catalyzes the reaction between a Michael donor and a Michael acceptor. Without being bound by theory, it is believed that the catalyst abstracts a proton from the Michael donor, generating an enolate anion.

Some suitable catalysts can be selected from the following: sodium salts of carboxylic acids, magnesium salts of carboxylic acids, aluminum salts of carboxylic acids, chromium salts of alkyl carboxylic acids 1 to 22 carbon atoms, including 6 or fewer carbon atoms, chromium salts of aromatic carboxylic acids, potassium salts of alkyl mono-carboxylic acids having 1 to 22 carbon atoms, including 6 or fewer carbon atoms, potassium salts of multi-carboxylic acids, and mixtures thereof. By "mono-carboxylic acid" is meant herein a carboxylic acid with one carboxyl group per molecule. By "multi-carboxylic acid" is meant herein a carboxylic acid with more than one carboxyl group per molecule. Among sodium, magnesium, and aluminum salts of carboxylic acids are, for example, sodium, magnesium, and aluminum salts of the following types of carboxylic acids: aromatic carboxylic acids, alkyl carboxylic acids with 7 to 22 carbon atoms, alkyl carboxylic acids with 6 or fewer carboxylic acids, and mixtures thereof.

Other useful catalysts include sodium and potassium carbonate and bicarbonates, phosphates, hydrogen phosphates, and phosphate esters.

Some suitable weakly basic catalysts are, for example, potassium acetate, sodium octoate, potassium caprylate and chromium acetate. Mixtures of suitable soluble weakly basic catalysts are also suitable.

Suitable strong base catalysts include, for example, alkoxides, carbonates, bicarbonates, phosphates, hydrogenphosphates, acetoacetonates, amidines, guanidines, diaza compounds, alkyl amines, tetraalkyl ammonium salts that are strong bases, derivatives thereof, and mixtures thereof. Any metal salt of the bases is usefully employed, include alkaline metal salts, alkaline earth metal salts and other metal salts.

Further compounds known to function as other catalysts are blocked catalysts, which are amine or ammonium compounds that are used in combination with carboxylic acids that either evaporate or decarboxylate under curing conditions. Blocked catalysts are described, for example in U.S. Patent No. 5,219,958. Some blocked catalysts use amidine compounds, quaternary ammonium compounds, or mixtures thereof in combination with carboxylic acid that either evaporates or decarboxylates under curing conditions.

In some cases, multifunctional Michael acceptor compounds, as supplied by a manufacturer, contain some amount (usually a relatively small amount) of a salt of a carboxylic acid. It is contemplated that the present invention can be practiced with multifunctional Michael acceptors that do contain such salts, with multifunctional Michael acceptors that do not contain such salts, or with a mixture thereof. Frequently, the acceptors may contain an acid. According to one embodiment, the acid is neutralized with a base prior or during use for the purpose of not inhibiting the reaction. According to a separate embodiment, the catalyst is generated in-situ.

In some embodiments, a suitable multifunctional Michael acceptor, as supplied by a manufacturer, contains at least one salt that is suitable as a soluble weakly basic catalyst. Such multifunctional Michael acceptors are contemplated

to be used in the practice of the present invention. In some cases, the amount of salt that is present in the multifunctional Michael acceptor, as supplied by the manufacturer, is low enough that it would be desirable, in the practice of the present invention, to use an additional amount of soluble weakly basic catalyst, which may be the same or different from the one already present in the multifunctional Michael acceptor.

An acid scavenger, as defined herein, is a compound that is capable of reacting with an acid, either a carboxylic acid or another acid. By "reacting with an acid" is meant herein that the acid scavenger is capable of interacting with the acid (for example, by forming a covalent bond, an ionic bond, or a complex) to form a temporary or permanent product; the interaction between the acid scavenger and the acid eliminates or reduces the tendency of the acid to participate in interactions with compounds other than the acid scavenger. Some examples of acid scavengers are tertiary amines (such as, for example, triethanol amine), aziridines (such as, for example, ethyleneimine), carbodiimides, organic titanium compounds, organic zirconates, weak base ion exchange resins, nitrogen containing resins (such as, for example, poly-2-ethyl-2-oxazoline and polyvinylpyrolidone), alkali metal carbonates and bicarbonates (such as, for example, potassium carbonate), and mixtures thereof. Some organic titanium compounds known to be effective as acid scavengers are, for example, tetra butyl titanate, tetra isopropyl titanate, and titanium acetylacetate, sold by DuPont Co. as, respectively, Tyzor™ TnBT, Tyzor™ TPT, and Tyzor™ AA.

Herein, a co-catalyst is any substance which activates a catalyst, or shifts the equilibrium from acetoacetate to enolate anion, thereby increasing the rate of cure.

Suitable co-catalysts include, but are not limited to aziridines and carbodiimides. Suitable aziridines include XAMA® 2 and XAMA® 7 from Bayer AG. Suitable carbodiimides include Carbodilite V-02L2 from Niishimbo, Ucarlink XL25 from Union Carbide. In some instances, co-catalysts can also function as acid scavengers.

In some embodiments, the curable composition contains one or more reaction promoter. In other embodiments, the curable composition contains no reaction promoter, relying on one or more reaction promoters in or on a surface.

As used herein, "(meth)acrylate" means acrylate or methacrylate, and "(meth)acrylic" means acrylic or methacrylic.

As used herein, the time required for viscosity to increase to a level that is not useful is referred to as "pot life". The compositions of the invention have long pot lives as compared to conventional compositions known in the art. The time required for the adhesive strength to reach an acceptable level is referred to as "cure time". The compositions of the invention have rapid cure times as compared to conventional compositions known in the art.. The term "reaction promoter" refers to any conventional physical promoters, including but not limited to for example, thermal and actinic radiation, and chemical promoters including but not limited to for example, reaction promoters selected from one or more of a catalyst, a co-catalyst and an acid scavenger. The inventors have also discovered certain substrates which are themselves reaction promoters. Suitable chemical promoters include but are not limited to for example, Polyethylene imine, amine terminated polyamides, amino silanes, and base neutralized latices.

The present invention involves the use of compounds with functional groups capable of undergoing a Michael addition reaction. Michael addition is taught, for example, by RT Morrison and RN Boyd in Organic Chemistry, third edition, Allyn and Bacon, 1973. The reaction is believed to take place between a Michael donor and a Michael acceptor, in the presence of a base catalyst.

The present invention provides a curable composition comprising: at least one multi-functional Michael donor, at least one multi-functional Michael acceptor, and at least reaction promoter, wherein the at least one reaction promoter is applied to at least one substrate or is included in one or more compositions applied to at least one substrate and wherein the polymer composition has an extended pot life and short cure time. Upon contact with the surface of at least one substrate containing the reaction promoter, the composition cures via a promoted or catalyzed carbon Michael addition reaction.

The inventors have also discovered certain substrates which are substantially inhibiting to Michael cured thermoset compositions, so that even thermoset compositions with very short pot lives do not cure. In many cases, these inhibiting substrates may be rendered suitable for Michael curable thermoset compositions by incorporation of a reaction promoting ingredient during manufacture of the substrate, or in a subsequent treatment of the substrate.

The reaction promoter may act primarily at the surface or alternatively may act throughout the bulk of the curable composition.

The curable composition is applied to at least one substrate. The at least one substrate includes a portion up to all of the catalyst, co-catalysts or acid scavenger to which the adhesive, sealant, coating and elastomer is applied. In addition the catalyst, co-catalysts or acid scavenger may be included in compositions, including inks, applied to at least one substrate. The catalyst, co-catalysts or acid scavenger may be included in the native composition of the substrate, may be incorporated in to at least one substrate by one or more chemical treatments, and/or may be incorporated in to at least one substrate by one or more physical treatments.

The curable composition is applied to the substrate by any conventional method, such as spray coating, roll coating, slot coating, meniscus coating, immersion coating, and direct, offset, and reverse gravure coating. The composition in the form of an adhesive, is disposed on a wide variety of substrates, including, but not limited to polyolefins,

such as oriented polypropylene (OPP), SiOx coated OPP, PVDC coated OPP, cast polypropylene, polyethylene, LDPE, PVDC coated LDPE, and polyethylene copolymers, polystyrene, polyesters, such as polyethylene terephthalate (PET), SiOx coated PET, PVDC coated PET, or polyethylene naphthalate (PEN), polyolefin copolymers, such as ethylene vinyl acetate, ethylene acrylic acid and ethylene vinyl alcohol (EVOH), polyvinylalcohol and copolymers thereof, polyamides such as nylon and meta-xylene adipamide (MXD6), polyimides, polyacrylonitrile, polyvinylchloride, polyvinylidene chloride, and polyacrylates, ionomers, polysaccharides, such as regenerated cellulose, and silicone, such as rubbers or sealants, other natural or synthetic rubbers, glassine or clay coated paper, paper board or kraft paper, and metallized polymer films and vapor deposited metal oxide coated polymer films, such as AlOX, SiOx, or TiOx, metal foils such as Al foil and Cu foil, inks (polyamide based, polyurethane based, nitrocellulose based, poly acrylate based, poly vinyl butyral based, poly vinyl chloride based), glass, flooring materials including concrete, metals including steels.

Many of the aforesaid substrates are likely to be in the form of a film or sheet, though this is not obligatory. The substrate may be a copolymer, a laminate, a co-extrudate, a blend, a coating or a combination of any of the substrates listed above according to the compatibility of the materials with each other. In addition, the substrate may be in the form of an article made from materials such as polyethylene, polypropylene, polystyrene, polyamides, PET, EVOH, or laminates containing such materials. In addition, the substrate may be in the form of an assembled object such as a glass window, ceramic bathroom fixtures, flooring materials, concrete fixtures and the like.

The aforesaid substrates may also be pretreated prior to coating by corona treatment, plasma treatment, flame treatment, acid treatments and flame treatments, all of which are known in the art.

After the composition has been applied to the first substrate, it may then be contacted with another substrate to form a composite. The composite so formed is optionally subjected to applied pressure, such as passing it between rollers to effect increased contact of the substrates with the composition. In another embodiment of the invention, the composition may be simultaneously or sequentially applied to both surfaces of the first substrate, which composition are then simultaneously or sequentially bonded to two further substrates, which may be the same, or different. It is further contemplated that the composite construction may sequentially be bonded to other substrate(s) using the composition of the invention, or a different composition before or after the process described herein. The first and second substrates to be bonded in the method of this invention may be the same or different and include, for example plastics, metalized plastics, metal, and paper, which may have smooth or structured surfaces and may be provided in the form of rolls, sheets, films, foils etc.

In some embodiments of the present invention, the substrates are relatively thin and flat, and the resulting composites are called laminates. The substrates may be constructed in multi-ply laminate structures based upon polyeolefins, such as polyethylenes, and polypropylenes, polyesters, and polyamides (nylon), metalized polypropylene, aluminum foil, etc. Examples of two-ply laminate constructions, include polypropylene/polypropylene, polyester/nylon, polyester/polyethylene, polypropylene/metallized polypropylene, polypropylene/aluminum foil, polyethylene/aluminum foil, polyester/aluminum foil, polyamide/aluminum foil, *etc.*

It is contemplated that the curable composition of the present invention will undergo a chemical reaction, called here "cure." While the invention is not limited to any particular theory, it is believed that cure begins when the curable composition is formed and that it continues at least until the end of the pot life, and may continue after that. In some embodiments, before the end of the pot life, a layer of the curable mixture will be applied to a substrate. In some of these embodiments, at least one further substrate will be contacted with the layer of curable mixture; often, the further substrate will be contacted with the layer curable mixture before the end of the pot life. Thus, in some embodiments, the cure will not finish until after the curable composition and both substrates are in contact. It is contemplated that the cured mixture will form a useful adhesive bond between the substrates.

While the invention is particularly useful as an adhesive, it is contemplated that it is also applicable to coatings, films, polymeric foams, sealants, and elastomers. When used as a coating or a sealant, the curable mixture or composition will be applied to a substrate and then allowed to cure, and further substrates may not be brought into contact with the curable mixture or composition. When used as a sealant, foam, or elastomer, the curable mixture may, for example, be placed in a mold or on a release surface and allowed to cure; the cured mixture could then be removed from the mold or release surface and used as intended.

A "Michael donor," as used herein, is a compound with at least one Michael donor functional group, which is a functional group containing at least one Michael active hydrogen atom, which is a hydrogen atom attached to a carbon atom that is located between two electron-withdrawing groups such as C=O and/or C≡N. Examples of Michael donor functional groups are malonate esters, acetoacetate esters, malonamides, and acetoacetamides (in which the Michael active hydrogens are attached to the carbon atom between two carbonyl groups); and cyanoacetate esters and cyanoacetamides (in which the Michael active hydrogens are attached to the carbon atom between a carbonyl group and a cyano group). A compound with two or more Michael active hydrogen atoms is known herein as a multi-functional Michael donor. A Michael donor may have one, two, three, or more separate functional groups that each contain one or more Michael active hydrogen atoms. The total number of Michael active hydrogen atoms on the molecule is the functionality of the Michael donor. As used herein, the "backbone" or "skeleton" of the Michael donor is the portion of the donor

molecule other than the functional group containing the Michael active hydrogen atom(s).

The curable compositions of this invention may be based on either petroleum based or bio-based reactants or combinations thereof. One or more bio-based Michael components may be usefully employed in accordance with the invention, including but not limited to a bio-based Michael donor, a bio-based Michael acceptor and the combination of a bio-based Michael donor and a bio-based Michael acceptor. The s are curable and polymer compositions resulting from them may be capable of further reaction. A curable or polymer composition based on carbon Michael donors and acceptors may contain more than one donor and/or more than one acceptor. In embodiments where several Michael donors and/or acceptors are present, combinations of donors and acceptors whose chemical skeletons are based on both or either petroleum based and bio-based feedstock are used, as long as the weight percent of reactant derived from bio-based feedstock is greater than 25 percent by weight, based on the total weight of the or polymer composition.

A "bio-based Michael donor" as used herein, is a compound with at least one Michael donor functional group, in which the Michael donor functional groups, as defined previously, are placed on a "backbone" molecule derived from either sugars, starch, cellulose, crop oils, animal fats, or animal proteins. An example of such a bio-based Michael donor is the acetoacetate of mono- and di-saccharides such as maltose, fructose or sucrose. For example, one process of producing saccharide acetoacetates is described in U.S. Pat. No. 4,551,523, as illustrated below.

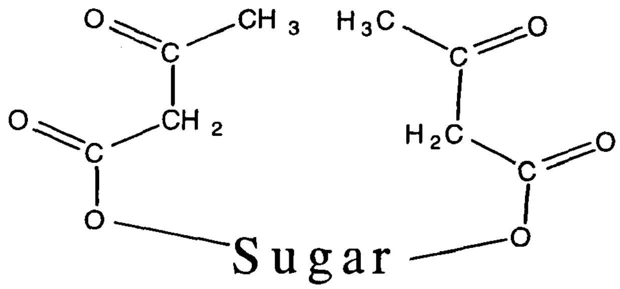

A "Michael acceptor," as used herein, is a compound with at least one functional group with the structure (**II**)

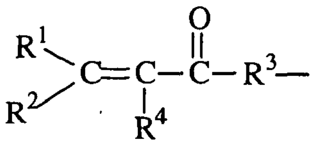

**(II)**

where $R^1$, $R^2$, and $R^4$ are, independently, hydrogen or organic radicals such as for example, alkyl (linear, branched, or cyclic), aryl, aryl-substituted alkyl (also called aralkyl or arylkyl), and alkyl-substituted aryl (also called alkaryl or alkylaryl), including derivatives and substituted versions thereof. $R^1$, $R^2$, and $R^4$ may or may not, independently, contain ether linkages, carboxyl groups, further carbonyl groups, thio analogs thereof, nitrogen-containing groups, or combinations thereof. $R^3$ is oxygen, a nitrogen-containing group, or any of the organic radicals described above for $R^1$, $R^2$, and $R^4$. A compound with two or more functional groups, each containing structure (II), is known herein as a multi-functional Michael acceptor. The number of functional groups containing structure (II) on the molecule is the functionality of the Michael acceptor. As used herein, the "backbone" or "skeleton" of the Michael acceptor is the portion of the donor molecule other than structure (II). Any structure (II) may be attached to another (II) group or to the skeleton directly.

A "bio-based Michael acceptor" as used herein, is a compound with at least one Michael acceptor functional group, in which the functional groups, as defined previously, are placed on a "backbone" ($R^3$ structure (II) above) molecule derived from either sugars, starch, cellulose, crop oils, fats, or proteins. Examples of such a bio-based Michael acceptor include but are not limited to the di-acrylate of epoxidized soya oil, as illustrated, or propoxylated glyceryl triacrylate.

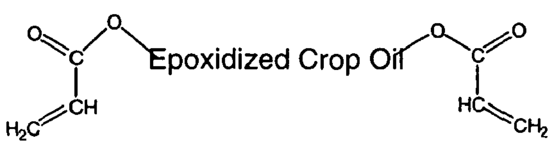

The present invention includes the use of at least one catalyst. A "catalyst," as used herein, is a compound that will catalyze a Michael addition reaction. While the invention is not limited to any specific theory, it is believed that the catalyst abstracts a hydrogen ion from the Michael donor. According to one embodiment, the catalyst is basic. According to a separate embodiment, the catalyst is weakly basic. According to a separate embodiment, the Michael acceptor and donor have a low acid content relative to the concentration of the catalyst. According to another embodiment, the Michael donor and acceptor are independent of the type of catalyst employed.

In some embodiments, one or more optional adjuvants may be used. Adjuvants are materials that are not Michael donors, Michael acceptors, or catalysts; adjuvants are also called herein "non-functional ingredients." Adjuvants are chosen to improve the properties of either the or cured polymer composition. Suitable adjuvants include, but are not limited to for example, such materials as solvents, tackifiers, emulsifiers, polymers, plasticizers, blowing agents, expandable microspheres, pigments, dyes, fillers, stabilizers and thickeners. Adjuvants are preferably chosen and used in a way that does not interfere with the practice of the invention (for example, adjuvants will preferably be chosen that do not interfere with the admixing of the ingredients, the cure of, the application to substrate, or the final properties of the cured ). In addition to adjuvants, the addition of one or more adhesion promoters are usefully employed in s and polymer compositions of the invention.

In the practice of the present invention, the skeleton of the multi-functional Michael acceptor may be the same or different from the skeleton of the multi-functional Michael donor. In some embodiments, one or more polyhydric alcohols are used as at least one skeleton. Polyhydric alcohols suitable as skeletons for either the multi-functional Michael acceptor or the multi-functional Michael donor include, but are not limited to for example, alkane diols, alkylene glycols, alkane diol dimers, alkane diol trimers, glycerols, pentaerythritols, polyhydric polyalkylene oxides, other polyhydric polymers, and mixtures thereof. Additional polyhydric alcohols suitable as skeletons include, for example, cyclohexane dimethanol, hexane diol, trimethylol propane, glycerol, ethylene glycol, propylene glycol, pentaerythritol, neopentyl glycol, diethylene glycol, dipropylene glycol, butanediol, 2-methyl-1,3-propanediol, trimethylolethane, similar polyhydric alcohols, substituted versions thereof, and mixtures thereof.

Further examples of polyhydric alcohols suitable as skeletons in the present invention include, for example, polyhydric alcohols with molecular weight of 150 or greater (in addition to those named herein above). Also, mixtures of suitable polyhydric alcohols are suitable.

In some embodiments, the skeleton of the multi-functional Michael donor or the multi-functional Michael acceptor or both is an oligomer or a polymer. A polymer, as used herein and as defined by FW Billmeyer, JR. in Textbook of Polymer Science, second edition, 1971 ("Billmeyer") is a relatively large molecule made up of the reaction products of smaller chemical repeat units. Normally, polymers have 11 or more repeat units. Polymers may have structures that are linear, branched, star shaped, looped, hyper-branched, or cross-linked; polymers may have a single type of repeat unit ("homopolymers") or they may have more than one type of repeat unit ("copolymers"). Copolymers may have the various types of repeat units arranged randomly, in sequence, in blocks, in other arrangements, or in any mixture or combination thereof.

Polymers have relatively high molecular weights. Polymer molecular weights can be measured by standard methods such as, for example, size exclusion chromatography or intrinsic viscosity. Generally, polymers have number-average molecular weight (Mn) of 1,000 or more. Polymers may have extremely high Mn; some polymers have Mn above 1,000,000; typical polymers have Mn of 1,000,000 or less.

"Oligomers," as used herein, are structures similar to polymers except that oligomers have fewer repeat units and lower molecular weight. Normally, oligomers have 2 to 10 repeat units. Generally, oligomers have Mn of 400 to 1,000.

In some embodiments, the will be made and used as a "batch." That is, a certain amount of will be formed in a container and then used as desired. Also contemplated are embodiments in which the is made and used continuously, such as, for example, by adding all the ingredients or packs to a continuous-stream device such as, for example, an extruder.

In the practice of the present invention, the ingredients may be assembled in any combination, in any order. In some embodiments, the ingredients will be added simultaneously or in sequence to a container and admixed. In some embodiments, two or more ingredients will be mixed together and stored as a mixture (herein called a "pack"), to be combined with further ingredients at a later time to form the of the present invention. When some ingredients are mixed together to form a pack, the remaining ingredients, even if stored in pure form, will also be called "packs" herein. Embodiments in which the ingredients are stored in two or more packs are herein called "multi-pack" embodiments.

In some embodiments, the of the present invention is a two-pack composition. The term "two-pack" is used herein to mean that all the ingredients necessary for Michael addition to occur are contained in the admixture obtained by admixing the first pack and the second pack. It is contemplated that some embodiments of the present invention will involve using the obtained by admixing the first pack and the second pack without adding any adjuvants to the admixture obtained by admixing the first pack and the second pack. Also contemplated are embodiments in which the first pack, the second pack, and one or more adjuvants are admixed to form the of the present invention.

In the practice of two-pack embodiments of the present invention, the first pack contains at least one multi-functional Michael acceptor, and the second pack contains at least one multi-functional Michael donor. In the practice of two-pack embodiments of the present invention, one or both of the first pack and the second pack contains at least one soluble weakly basic catalyst. In some two-pack embodiments, the first pack, or the second pack, or both packs, contains further optional adjuvants. In some two-pack embodiments, the ingredients for each pack are chosen so that no one pack will contain all three of a Michael acceptor, a Michael donor, and a catalyst.

Also contemplated are embodiments that involve the use of at least one compound that is both a Michael acceptor and a Michael donor; such a compound has both at least one Michael donor functional group and at least one functional group with structure (II). It is contemplated that such a compound would not be used in the same pack as a compound that is effective as a catalyst for Michael addition.

In some embodiments, the ratio of the total weight of all multi-functional Michael acceptors to the total weight of all multi-functional Michael donors is at least 0.25:1, or at least 0.33:1, or at least 0.5:1, or at least 0.66:1. Independently, in some embodiments, the ratio of the total weight of all multi-functional Michael acceptors to the total weight of all multi-functional Michael donors is 4:1 or less, or 3:1 or less, or 2:1 or less, or 1.5:1 or less.

In some embodiments of the present invention, one or more of the ingredients of the are dissolved in a solvent or otherwise carried in a fluid medium (for example, as an emulsion or dispersion). If a solvent or other fluid medium is used with one or more ingredients, the solvents or other fluid media of the plural ingredients may be chosen independently of each other. In some embodiments, the is substantially free of solvent. As defined herein, a material is "substantially free of solvent" if that material contains at least 75% solids by weight based on the total weight of that material. By "solids" is meant herein the weight all Michael donors, all Michael acceptors, all polymers, all materials that are solid when pure at 25°C, and all materials with boiling point above 200°C. In some embodiments, the is at least 80% solids, or at least 90% solids, or at least 95% solids, or at least 98% solids, by weight based on the weight of the.

Also contemplated are "low solids" embodiments, which are embodiments in which the contains less than 75% solids by weight based on the weight of the. In some low solids embodiments, the solids may be dissolved in a fluid medium or dispersed in a fluid medium or a combination thereof. In low solids embodiments, the non-solid ingredients may include one or more non-aqueous compounds, or water, or a combination thereof. In some low solids embodiments, the contains 25% solids or higher, by weight based on the weight of the. In some low solids embodiments, one or more Multi-functional Michael donor, one or more multi-functional Michael acceptor, or one or more of each, is a polymer.

Independently, in some embodiments of the present invention, the or composition contains no compounds with epoxide groups. Independently, in some embodiments of the present invention, the contains no compounds with isocyanate groups. Independently, in some embodiments of the present invention, the contains no compounds with reactive groups capable of chemical reactions effective for curing other than compounds with reactive groups that participate in the Michael addition reaction.

By manipulating reaction equivalents ratios of donors and acceptors, reactant functionalities, catalysts and amounts thereof, and adjuvants levels or levels of other additives, those having skill in the art can prepare polymers of the invention that have linear, branched and cross-linked structures.

In the s of the present invention, the relative proportion of multi-functional Michael acceptors to multi-functional Michael donors can be characterized by the reactive equivalent ratio, which is the ratio of the number of all the functional groups (II) in the to the number of Michael active hydrogen atoms in the. In some embodiments, the reactive equivalent ratio is 0.1:1 or higher; or 0.2:1 or higher; or 0.3:1 or higher; or 0.4:1 or higher; or 0.45:1 or higher. In some embodiments, the reactive equivalent ratio is 3:1 or lower; or 2:1 or lower; or 1.2:1 or lower; or 0.75:1 or lower; or 0.6:1 or lower.

In some embodiments, it is contemplated that the cured will have few or no unreacted functional groups (II).

Some embodiments are contemplated in which the cured has few or no unreacted multifunctional Michael acceptor molecules but does have a useful amount of unreacted functional groups (II). In some embodiments, the presence of unreacted functional groups (II) in the cured , either with or without unreacted multifunctional Michael acceptor molecules, will be desirable (for example, if it is intended to conduct further chemical reactions. In other embodiments, it will be desirable for the cured to have few or no unreacted multifunctional Michael acceptor molecules, or it will be desirable for the cured to have few or no unreacted functional groups (II); in such embodiments, it is contemplated that the practitioner will readily be able to choose a reactive equivalent ratio that will be low enough to make it likely that the cured will have few or no unreacted multifunctional Michael acceptor molecules or to have few or no unreacted functional groups (II), as desired. Analogously, the cured can have a useful amount of unreacted donor groups.

In some embodiments of the present invention, multi-functional Michael donors, multi-functional Michael acceptors, soluble weakly basic catalysts, and any other ingredients are chosen so that the thereof is homogeneous (i.e., the mixture will not phase separate upon standing or curing). Also envisioned are embodiments in which the contains one or more ingredients dispersed as a suspension in liquid; it is useful in some of such embodiments that the suspension be stable (i.e., that the solids do not settle or coagulate upon standing or curing).

The practice of the present invention involves the use of at least one multi-functional Michael acceptor. In some embodiments, the skeleton of the multi-functional Michael acceptor is the residue of a polyhydric alcohol, such as, for example, those listed herein above. In some embodiments, the skeleton of the multi-functional Michael acceptor may

be a polymer. In some embodiments, the skeleton of the multi-functional Michael acceptor may be an oligomer.

Some suitable multi-functional Michael acceptors in the present invention include, for example, molecules in which some or all of the structures (II) are residues of (meth)acrylic acid, (meth)acrylamide, fumaric acid, or maleic acid, substituted versions thereof, or combinations thereof, attached to the multi-functional Michael acceptor molecule through an ester linkage or an amide linkage. A compound with structures (II) that include two or more residues of (meth)acrylic acid attached to the compound with an ester linkage is called herein a "multi-functional (meth)acrylate." Multi-functional (meth)acrylates with at least two double bonds capable of acting as the acceptor in Michael addition are suitable multi-functional Michael acceptors in the present invention. Some suitable multi-functional (meth)acrylates are, for example, multi-functional acrylates (compounds with two or more residues of acrylic acid, each attached via an ester linkage to the skeleton; also called MFAs).

It is to be understood herein that an acceptor that is described as "an acrylate of" (or as "diacrylate of" or as "triacrylate of", etc.) a compound or that is described as an "acrylated" compound has a structure that could be formed by reacting that compound with acrylic acid. In many cases , the acceptor so described is actually made by performing such a reaction, though the acceptor so described could in fact be made by other methods. It is contemplated that some suitable acceptors will be described as "acrylated" or as "acrylate of" (or "diacrylate of" or "triacrylate of", etc.) compounds with hydroxyl groups, amine groups, epoxide groups, other groups that are thought to react with carboxyl groups, or combinations thereof. For example, the acceptor

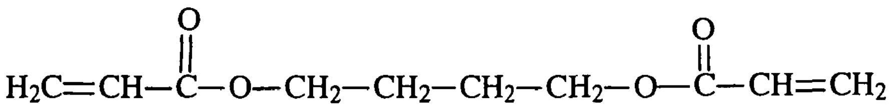

is described as acrylated butane diol and is also described as the diacrylate of butane diol; it is contemplated this acceptor could be made by reacting butane diol with acrylic acid, though the same structure could be made by any method. For another example, if a known diglycidyl ether compound had the structure (**III**):

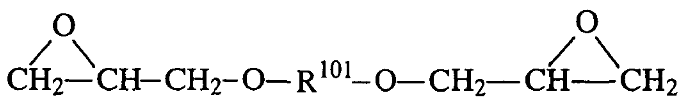

(III)

then the MFA described as the "diacrylate of III" would have the following structure:

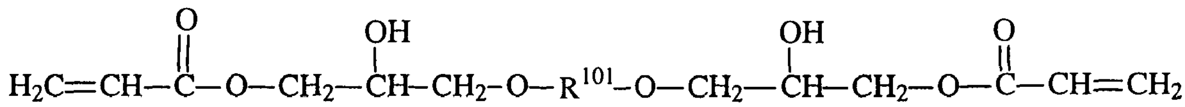

Examples of suitable multi-functional Michael acceptors that are MFAs include, but are not limited to for example, diacrylates of one or more of the following: alkyl diols, glycols, ether-containing diols (such as, for example, dimers of glycols, trimers of glycols, and polyalkylene diols), alkoxylated alkyl diols, polyester oligomer diols, bisphenol A, ethoxylated bisphenol A, and polymers with at least two hydroxyl groups. Also suitable are triacrylates of similar triols, including, for example, alkyl triols and alkoxylated alkyl triols. Additionally suitable are tetra-, penta-, and higher acrylates of similar polyhydric compounds. Bio-based Michael acceptors include but are not limited to acceptors derived from epoxidized soya, saccharides, castor oil, glycerol, 1,3-propanediol, propoxylated glycerol, Lesquerella oil, isosorbide, sorbitol, and mannitol.

Further examples of suitable MFAs include di-, tri-, tetra-, and higher acrylates of compounds that have two or more functional groups, other than hydroxyl groups, that are capable of forming ester linkages with acrylic acid. Such MFAs include, for example, diacrylates of compounds with two epoxide groups, such as, for example, epoxy resins, diglycidyl ether, bisphenol A diglycidyl ether, ethoxylated bisphenol A diglycidyl ether, and mixtures thereof.

Also among suitable multi-functional Michael acceptors are compounds with two or more functional groups each containing structure (II) in which one or more of the functional groups containing structure (II) is the residue of (meth)acrylamide. In other suitable multi-functional Michael acceptors, at least one functional group containing structure (II) is a residue of (meth)acrylamide, and at least one functional group containing structure (II) is a functional group other

than a residue of (meth)acrylamide.

The practice of the present invention involves the use of at least one multi-functional Michael donor. In some embodiments of the present invention, the skeleton of the multifunctional Michael donor is the residue of a polyhydric alcohol, such as, for example, those listed herein above. In some embodiments, the skeleton of the multi-functional Michael donor may be a polymer, such as for example, a poly alkylene oxide, a polyurethane, a polyethylene vinyl acetate, a polyvinyl alcohol, a polydiene, a hydrogenated polydiene, an alkyd, an alkyd polyester, a polyolefin, a halogenated polyolefin, a polyester, a halogenated polyester, a (meth)acrylate polymer, a copolymer thereof, or a mixture thereof. Bio-based Michael donors include but are not limited to donors derived from epoxidized soya, saccharides, castor oil, glycerol, 1,3-propanediol, propoxylated glycerol, Lesquerella oil, isosorbide, sorbitol and mannitol.

In embodiments in which the skeleton of a multi-functional Michael donor is a polymer, the Michael donor functional group may be pendant from the polymer chain, or it may be incorporated into the polymer chain, or a combination thereof.

In suitable multi-functional Michael donors, the functional groups with Michael active hydrogens may be attached to the skeletons in any of a wide variety of arrangements. In some embodiments, the multi-functional Michael donor has the structure

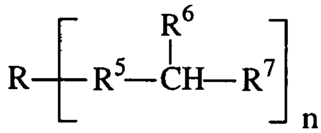

where n is 2 or more; $R^5$ is $R^7$ is

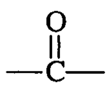 or 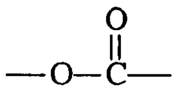 or 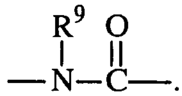;

$R^7$ is

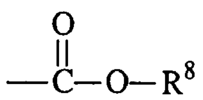 or 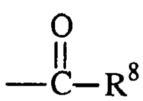 or 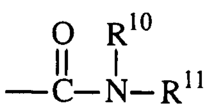 or $-C\equiv N$;

$R^6$, $R^8$, $R^9$, $R^{10}$, and $R^{11}$ are, independently, H, alkyl (linear, cyclic, or branched), aryl, arylkyl, alkaryl, or substituted versions thereof; and R is a residue of any of the polyhydric alcohols or polymers discussed herein above as suitable as the skeleton of a multi-functional Michael donor. In some embodiments, $R^6$ will be the residue of a Michael acceptor. In some embodiments, one or more of $R^6$, $R^8$, $R^9$, $R^{10}$, and $R^{11}$ will be attached to further functional groups with Michael active hydrogens.

In some embodiments, n is 3 or more. In some embodiments, the composition contains more than one multi-functional Michael donor. In such embodiments, the mixture of multi-functional Michael donors can be characterized by the number-average value of n. In some embodiments, the mixture of multi-functional Michael donors in the composition has a number average value of n of 4 or less, or 3 or less.

Some suitable multi-functional Michael donors include, for example, acetoacetoxy substituted alkyl (meth) acrylates; amides of malonic acid, amides of acetoacetic acid, alkyl esters of malonic acid, and alkyl esters of acetoacetic acid, where the alkyl groups may be linear, branched, cyclic, or a combination thereof.

Some suitable multi-functional Michael donors are, for example, alkyl compounds with two or more acetoacetate groups. Such multi-functional Michael donors include, for example, alkyl diol diacetoacetates (also known as alkyl diol bisacetoacetates) such as, for example, butane diol diacetoacetate, 1,6-hexanediol diacetoacetate, neopentylglycol diacetoacetate, the diacetoacetate of 4,8-Bis(hydroxymethyl)tricyclo[5.2.1.$0^{2,6}$]decane, 2-methyl-1,3-propanediol diacetoacetate, ethylene glycol diacetoacetate, propylene glycol diacetoacetate; cyclohexanedimethanol diacetoacetate; other diol diacetoacetates; alkyl triol triacetoacetates (also known as alkyl triol trisacetoacetates), such as, for example, trimethylol propane triacetoacetate, pentaerythritol triacetoacetate, glycerol trisacetoacetate, or trimethylolethane triacetoacetate; and the like. Some further examples of suitable multi-functional Michael donors include tetra-, penta-, and

higher acetoacetates of polyhydric alcohols (i.e., polyhydric alcohols on which four, five, or more hydroxyl groups are linked to acetoacetate groups through ester linkages), including, for example, pentaerythritol tetraacetoacetate, dipentaerythritol pentaacetoacetate, and dipentaerythritol hexaacetoacetate.

Some additional examples of suitable multi-functional Michael donors are glycol ether diacetoacetates (also known as glycol ether bisacetoacetates), such as, for example, diethylene glycol diacetoacetate, dipropylene glycol diacetoacetate, polyethylene glycol diacetoacetate, and polypropylene glycol diacetoacetate.

Some other suitable multi-functional Michael donors are those with a single Michael donor functional group per molecule, where that Michael donor functional group has two Michael active hydrogen atoms. Such multi-functional Michael donors include, for example, alkyl mono-acetoacetates (i.e., a compound whose structure is an alkyl group with a single attached acetoacetate group).

Additional examples of suitable multi-functional Michael donors include compounds with one or more of the following functional groups: acetoacetate, acetoacetamide, cyanoacetate, and cyanoacetamide; in which the functional groups may be attached to one or more of the following skeletons: polyesters, polyethers, (meth)acrylic polymers, and polydienes.

Alternatively, Michael donors are the reaction product of acceptors and excess donors. For example the reaction product of a multifunctional acceptor and excess acetoacetonate.

Some suitable multi-functional Michael donors include, for example, oligomers and polymers that are made from monomers that include acetoacetoxyethyl methacrylate (AAEM) and one or more of the following: (meth)acrylic acid, esters of (meth)acrylic acid, amides of (meth)acrylic acid, substituted versions thereof, and mixtures thereof. It is contemplated that, in some embodiments, at least one such oligomer or polymer will be used that is made from monomers that include 10% by weight or more of AAEM, based on the weight of all monomers used to make that oligomer or polymer.

Some suitable multi-functional Michael donors are multifunctional acetoacetate functional polyester polymers and acetoacetate functional polyesteramides.

Mixtures of suitable multi-functional Michael donors are also suitable.

One category of multi-functional Michael donors are known as malonates. Malonates have

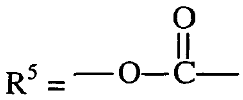 and 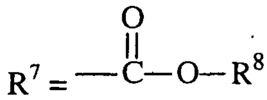

(where $R^5$, $R^7$, and $R^8$ are defined herein above). Malonates may or may not be used; that is, in such embodiments, non-malonate multi-functional Michael donors are used.

While the present invention provides for reaction promoters present on surfaces to which the compositions come in contact, it is understood the compositions may also contain reaction promoters.

According to one embodiment, at least one soluble weakly basic catalyst is used. A catalyst is "soluble" as defined herein if it meets the following solubility criterion. A suitable test mixture is selected; the test mixture may be a single multi-functional Michael acceptor, a mixture of two or more multi-functional Michael acceptors, a single multi-functional Michael donor, or a mixture of two or more multi-functional Michael donors. The test mixture is part or all of the in which the weakly basic catalyst will be used. The ratio of the weight of that catalyst to be used in the to the sum of the weights of all multi-functional Michael acceptors and all multi-functional Michael donors in the is herein called X1. The ratio of the sum of the weights of the ingredients of the test mixture to the sum of the weights of all the multi-functional Michael acceptors and all the multi-functional Michael donors in the is herein called X2. Then, to perform the solubility test, at least enough catalyst is added to the test mixture so that the ratio of the weight of catalyst to the weight of test mixture is Y or more, where Y = X1/X2. The mixture of catalyst and test mixture is subjected to the dissolution procedure defined herein below, and the amount of catalyst actually dissolved in the test mixture is determined thereby. If the ratio of the weight of actually-dissolved catalyst to the weight of test mixture is Y or greater, the catalyst is considered to be soluble.

One useful way of practicing the above solubility test is to choose a test mixture that contains one or more Michael donors but does not contain any Michael acceptors. Another useful way of practicing the above solubility test is to choose a test mixture that contains one or more Michael acceptors but does not contain any Michael donors.

The dissolution procedure used for determining solubility is defined herein as follows. The mixture of catalyst and test mixture is heated to 75°C for 2 hours; if the resulting mixture is clear (i.e., it shows no haze or sediment visible to the unaided eye), then the catalyst is considered to be soluble. If the resulting mixture is clear after heating to temperature below 75°C, or if the resulting mixture is clear when mixed at any temperature below 75°C, or if the resulting mixture is clear at a time less than 2 hours after the catalyst was added to the test mixture, the catalyst is considered to be soluble. If, after 2 hours at 75°C, the resulting mixture is not clear, it is filtered through 45-60 μm fritted glass; and

the filtrate is titrated with dilute HCl to determine the amount of catalyst that is actually dissolved in the test mixture.

When a filtrate is titrated with dilute HCl, one acceptable procedure is as follows. An amount of filtrate estimated to contain between 0.1 and 0.2 milliequivalents (meq) of catalyst is dissolved in 30 ml of denatured alcohol. This solution of filtrate is then titrated with aqueous 0.1 molar HCl to a sharp endpoint. Titrating may be done by using any of a wide variety of methods and/or apparatus known in the art. For example, an RTS822 recording titration system manufactured by Radiometer Analytical SAS may be used. The progress and the endpoint of the titration may be measured by any of a wide variety of methods and/or apparatus known in the art, for example using electrodes such as, for example a glass electrode and a reference electrode, such as, for example, pHG201 and REF201 electrodes from Radiometer Analytical SAS. After the endpoint is detected, the following amounts are calculated by standard methods: the moles of catalyst present in solution of filtrate, and the amount (wt. %) of catalyst actually dissolved in the test mixture.

In general, in the practice of the present invention, a catalyst is soluble if enough catalyst dissolves in the test mixture to provide sufficient catalyst in the so that, when the is formed, cure will take place. In some embodiments, catalyst dissolves in the test mixture in the amount of 0.1 gram or more of catalyst per 100 grams of test mixture; or 0.2 grams or more of catalyst per 100 grams of test mixture; or 0.5 grams or more of catalyst per 100 grams of test mixture; or 1 gram or more of catalyst per 100 grams of test mixture. If the mixture of catalyst and test mixture is mixed at temperature lower than 75°C, or for less time than two hours, or both, and a sufficient weight of catalyst is actually dissolved in the test mixture, then the catalyst is considered to be soluble.

In some embodiments of the present invention, at least one soluble weakly basic catalyst is used in the form of pure material. By "pure material" is meant herein material that has a level of purity that is readily obtainable from commercial manufacturers or has a higher level of purity.

In other embodiments of the present invention, the is formed by adding a solution of soluble weakly basic catalyst to other ingredients. By "solution of soluble weakly basic catalyst" is meant herein a homogeneous mixture of a solvent (which is a non-functional ingredient, as defined herein above) and a soluble (as defined herein above) weakly basic catalyst. The solvent in such embodiments may be water or an organic solvent, such as, for example, hydrocarbons, alcohols, and ketones. Water is known to be suitable. For example, in some embodiments, a solution of a soluble weakly basic catalyst is added to one or more multi-functional Michael acceptors. Some suitable solutions of soluble weakly basic catalyst have concentration of soluble weakly basic catalyst of 50% or higher, or 65% or higher, by weight based on the weight of the solution. In some embodiments involving addition of a solution of soluble weakly basic catalyst, the pack containing the soluble weakly basic catalyst, or the , is subjected to elevated temperature or reduced pressure or both to remove some or all of the solvent. In some embodiments in which the is subjected to elevated temperature to remove solvent, it is contemplated that such removal of solvent will be performed in a manner that does not interfere with applying the to substrate and/or with cure of the ; for example, solvent removal may be performed after the is applied to substrate, in which case it is contemplated that solvent removal and curing might take place fully or partially at the same time as each other. In other embodiments involving addition of a solution of soluble weakly basic catalyst, the solvent is left in place; that is, no steps are taken to remove the solvent. According to one embodiment, all solvent is removed before coating the composition.

In the practice of some embodiments of the present invention in which a solution of soluble weakly basic catalyst is added to a pack or to the , the pack to which the solution of soluble weakly basic catalyst is added, or the , will appear homogeneous.

In some embodiments of the present invention in which a solution of soluble weakly basic catalyst is added to a pack or to the , the resulting admixture will appear cloudy. In such embodiments, it is contemplated, without limiting the invention to any model or theory, that the cloudiness occurs because the solvent used in the solution of soluble weakly basic catalyst is incompatible or insoluble with other ingredients; that the solvent remains as a separate phase; and that the solvent exists as droplets dispersed throughout the volume of the pack. It is further contemplated that, when such a dispersion of solvent droplets occurs, the soluble weakly basic catalyst may remain in the solvent droplets, or the soluble weakly basic catalyst may migrate out of the solvent and become dissolved in the other ingredients, or the soluble weakly basic catalyst may partition in some proportion between the solvent droplets and the other ingredients. In these embodiments, regardless of the location of the soluble weakly basic catalyst, as long as the soluble weakly basic catalyst is capable of meeting the solubility criterion defined herein above, packs or s that include such dispersions of solvent droplets are considered suitable in the practice of the present invention.

As an example, in some embodiments, a soluble weakly basic catalyst is dissolved in water to form an aqueous solution, and that aqueous solution is then mixed with one or more multi-functional Michael acceptors.

In some embodiments of the present invention, the curable composition, prior to the onset of the cure process, does not include any anions (herein called "donor-derived anions") that can be created by removing a Michael active hydrogen atom from a Michael donor compound. An example of donor-derived anion is an acetoacetonate anion, which can be created by removing a Michael active hydrogen atom from an acetoacetate group. Similar donor-derived anions can be created by removing a Michael active hydrogen atom from any one of the Michael donor functional groups described herein above. Without limiting the invention to any particular theory, it is contemplated that, in some embodiments, after the curable composition is formed, once the cure process has begun, some compound that contains one or more donor-derived anions may be formed as an intermediate during the Michael addition reaction.

In some embodiments of the present invention, the curable composition does not contain any mono-functional Michael acceptors or donors, which are known to cause chain stopping. In other embodiments, the curable composition contains at least one mono-functional Michael acceptor. As used herein, a "mono-functional. Michael acceptor" is a Michael acceptor (as defined herein above) that has exactly one structure (II) in each molecule. Some mono-functional Michael acceptors include, for example, (meth)acrylic acid and esters thereof that have one structure (II) per molecule, including, for example, alkyl (meth)acrylates.

In some embodiments of the present invention, the curable composition does not contain any mono-functional Michael donors. In other embodiments, the curable composition contains at least one mono-functional Michael donor, in addition to at least one multi-functional Michael donor. As used herein, a "mono-functional Michael donor" is a Michael donor (as defined herein above) that has exactly one Michael active hydrogen in each molecule.

It is contemplated that the ingredients of the of the present invention will be chosen so that Michael addition will take place under the conditions of practicing the invention. For example, a particular multi-functional Michael acceptor may undergo the Michael addition reaction with some multi-functional Michael donors less readily than with other multi-functional Michael donors. For example, methacrylate groups usually react more readily with cyanoacetate groups than with acetoacetate groups. Further, some soluble weakly basic catalysts promote the Michael addition reaction more strongly than others. However, even if the reaction between a specific multi-functional Michael donor and a specific multi-functional Michael acceptor is slow or ineffective, in some cases it will be possible to speed the reaction or make it effective by employing a more basic catalyst, using larger amounts of basic catalyst, heating the mixture or combinations thereof. The practitioner of the invention will readily be able to choose an effective combination of ingredients to achieve the desired speed of curing in the practice of the present invention.

In the practice of the present invention, the is formed by admixing the ingredients; the admixing may be performed by any means. In some embodiments, the ingredients are all liquids, and they may be admixed simply by placing the ingredients in a container and stirring. If any ingredient is a solid, it is contemplated that sufficient agitation will be provided to dissolve or suspend the solid in the. In some embodiments, the various ingredients may be admixed on a substrate, for example by applying alternate layers of various ingredients or by spraying separate streams of various ingredients onto the same area of the substrate.

The curable composition of the present invention, when it is freshly mixed, should have a useful viscosity at 23°C. One useful means of measuring viscosity is with a Brookfield viscometer, with the spindle type and rotation speed chosen according to the instructions of the viscometer manufacturer as appropriate for the material to be measured. Generally, conditions for using Brookfield viscometer properly involve, for example, choosing spindle and rotation speed that give a reading on the instrument scale of 10% to 90% of full scale. For some embodiments, #4 spindle is appropriate. In some embodiments, the freshly-mixed will be a liquid with viscosity of 0.01 Pa*s (10 cps) or higher. The freshly-mixed will be a liquid with viscosity of 10,000 Pa*s (10,000,000 cps) or less. The desired viscosity will be determined by the means used to mix the ingredients and the means used to mold the or apply it to a substrate. In some embodiments involving application of the curable composition to substrate, viscosity of the is 0.1 Pa*s (100 cps) or greater; or 0.2 Pa*s (200 cps) or greater; or 0.4 Pa*s (400 cps) or greater. Independently, in some embodiments involving application of the to substrate, viscosity is 2,000 Pa*s (2,000,000 cps) or less; or 1,000 Pa*s (1,000,000 cps) or less; or 500 Pa*s (500,000 cps) or less. In embodiments involving use of the cured curable composition as elastomer and/or as polymeric foam, the preferred viscosity is usually higher than the preferred viscosity for s that are applied to substrate.

The curable composition of the present invention is capable of curing at 23°C in 7 days or less. The fact that curing takes place can be verified by measuring the pot life of the (i.e., the time from the formation of the until the viscosity of the mixture rises until it is so high that the can no longer be molded or applied to a substrate) at 23°C. The viscosity of the freshly-mixed curable composition may be measured by any standard method at 23°C; one useful viscosity measurement method is the use of a Brookfield viscometer, as discussed herein above.

One useful measure of the pot life is the time (herein called the "viscosity quintupling time") required for the viscosity of the curable composition to reach a value that is 5 times the viscosity of the freshly mixed. A useful alternative measure of the pot life is the time (herein called the "viscosity doubling time") required for the viscosity of the to reach a value that is 2 times the viscosity of the freshly mixed curable composition. It is contemplated that, when two mixtures are compared, the mixture with the longer viscosity quintupling time will also have the longer viscosity doubling time. Another useful alternative measure of the pot-life is the time required for the viscosity of the curable composition to reach a value that is 10 times the viscosity of the freshly mixed. Still another useful alternative measures of the pot-life is the time required for the viscosity of the curable composition to reach a value that is 100 times the viscosity of the freshly mixed curable composition.

Yet another useful measurement is the half life of the cure reaction. In general, it is contemplated that, when two mixtures are compared, the mixture with the longer half life will also have a longer viscosity quintupling time. The half life of the cure reaction is determined as follows. The curable composition is studied using any known analytical

method to measure the concentration of functional groups containing structure (II) (such functional groups are herein called "structure II-groups") present before the curing reaction begins and to measure, as a function of time (measured from the moment when the is formed), the concentration of structure II-groups that have reacted in the curing reaction. The ratio of the concentration of structure II-groups that have reacted in the curing reaction to the concentration of structure II-groups that were present before the curing reaction began is herein called "conversion." The half life of the curing reaction is the time required for conversion to reach 0.50. The half life may be assessed by any of a wide variety of methods.

One method of assessing the half life of the curing reaction is the line-fit method, which is performed as follows. At each time, conversion is measured and is used to calculate the "reaction progress ratio," herein defined as (conversion) /(1 - conversion). The values of reaction progress ratio as a function of time are fit to a straight line using a standard linear least-squares method. The half life of the cure reaction is then the reciprocal of the slope of the straight line thus determined. The line-fit method of assessing the half life is suitable when a person of ordinary skill in the art would consider the dependence of reaction progress ratio vs. time to be linear; if a person of ordinary skill in the art would consider the dependence of reaction progress ratio versus time to be nonlinear, then some other method of assessing the half life of the reaction would be used.

In some embodiments, pot life of the curable composition is 5 minutes or more; or 10 minutes or more; or 25 minutes or more. Independently, in some embodiments, pot life is 7 days or less; or 1 day or less; or 8 hours or less; or 2 hours or less; or 30 minutes or less.

In other embodiments, a shorter pot life of the curable composition is desirable. In some shorter pot life embodiments, pot life of the is 30 seconds or more; or 1 minute or more; or 2 minutes or more. Independently, in some shorter pot life embodiments, pot life is 20 minutes or less; or 10 minutes or less; or 5 minutes or less. For example, some embodiments in which the cured curable composition will be used as a foam or elastomer will desirably be shorter pot life embodiments.

In some embodiments of the present invention, the curable composition contains at least one acid scavenger. An acid scavenger, as defined herein, is a compound that is not a soluble weakly basic catalyst of the present invention and that is capable of reacting with an acid, either a carboxylic acid or another acid. By "reacting with an acid" is meant herein that the acid scavenger is capable of interacting with the acid (for example, by forming a covalent bond, an ionic bond, or a complex) to form a temporary or permanent product; the interaction between the acid scavenger and the acid eliminates or reduces the tendency of the acid to participate in interactions with compounds other than the acid scavenger. Some examples of acid scavengers are tertiary amines (such as, for example, triethanol amine), aziridines (such as, for example, ethyleneimine), carbodiimides, organic titanium compounds, organic zirconates, weak base ion exchange resins, nitrogen containing resins (such as, for example, poly-2-ethyl-2-oxazoline and polyvinylpyrolidone), alkali metal carbonates and bicarbonates (such as, for example, potassium carbonate), and mixtures thereof. Some organic titanium compounds known to be effective as acid scavengers are, for example, tetra butyl titanate, tetra isopropyl titanate, and titanium acetylacetate, sold by DuPont Co. as, respectively, Tyzor™ TnBT, Tyzor™ TPT, and Tyzor™ AA.

In some embodiments in which one or more acid scavengers are used, the acid scavenger includes one or more carbodiimide (CDI). Carbodiimides have the chemical structure

$$R^{21}—N{=}C{=}N—R^{12}$$

where $R^{21}$ and $R^{12}$ are, independent of each other, hydrocarbon structures or structures that contain, in addition to carbon and hydrogen, and at least one heteroatom (i.e., an atom other than hydrogen or carbon) such as, for example, oxygen, nitrogen, sulfur, or phosphorus. For example, $R^{21}$ and $R^{12}$ may be chosen from alkyl, aryl, alkyl-substituted aryl, aryl-substituted alkyl, and mixtures thereof. In some embodiments, at least one of $R^{21}$ and $R^{12}$ contains at least one ether link, thioether link, ester link, urethane link, or amide link. Also contemplated are carbodiimides in which one or both of $R^{21}$ and $R^{12}$ is a polymer.

In some embodiments, the acid scavenger of the present invention includes one or more carbodiimide that has the structure known as a polycarbodiimide (pCDI):

$$R^{13}—\left(R^{14}—N{=}C{=}N\right)_n—R^{15},$$

where n is 2 or greater, and where $R^{13}$, $R^{14}$, and $R^{15}$ are each independently chosen from the groups described herein above as suitable for $R^{21}$ and $R^{12}$. The $R^{14}$ groups may be all the same or may be any number (up to n) of different

groups. In some embodiments, at least one of $R^{13}$ and $R^{15}$ contains at least one ether link, thioether link, ester link, urethane link, or amide link. In some embodiments, at least one of $R^{13}$ and $R^{15}$ has molecular weigh of 200 or greater. In some embodiments, $R^{14}$ groups are chosen from alkyl, aryl, alkyl-substituted aryl, and combinations thereof. A pCDI in which all of the $R^{14}$ groups are chosen from aryl, alkyl-substituted aryl, and mixtures thereof are known herein as "aromatic pCDIs." In some embodiments, at least one pCDI is used. In some embodiments, at least one pCDI is used in which the $R^{14}$ groups are all the same.

Some embodiments of the present invention involve applying a layer of the to a substrate. The layer may be a continuous or discontinuous film. The method of application may be by any of a number of ways known to those having ordinary skill in the art, such as, for example, brushing, spraying, roller coating, rotogravure coating, flexographic coating, flow coating, curtain coating, dipping, hot melt coating, extrusion, co-extrusion, similar methods, and combinations thereof. In some embodiments, application of a layer of to substrate is performed at ambient temperature. In other embodiments, the application may be performed at elevated temperature, for example to adjust the viscosity of the

In other embodiments, particularly those in which the cured curable composition will be used as a foam or as an elastomer, the curable composition may be formed by mixing the ingredients in a mold or other suitable container and kept therein during the cure reaction. Alternatively, after the ingredients are mixed, the curable composition may be placed into a mold or other suitable container and kept therein during the cure reaction.

In some embodiments, the curable composition may be dried. That is, after the first pack and second pack are mixed together but before the curable composition is put to use, a period of time may elapse, to allow any volatile compounds, such as, for example, solvents, if any volatile compounds are present, to evaporate. During this period of time, in some embodiments, the curable composition may be exposed to reduced pressure or to a moving atmosphere. Drying may be performed before, during, or after the cure reaction takes place. Independently, in embodiments involving applying the curable composition to a substrate or placing it into a mold, drying may be performed before, during, or after the curable composition is applied to substrate or placed into a mold.

In some embodiments, few or no volatile compounds are released during the cure process. For example, in some embodiments, the weight of the curable composition reduces by 10% or less, based on the initial weight of the (i.e., the weight of the freshly-mixed curable composition), during the cure process. In some embodiments, the weight of the curable composition reduces by 5% or less, or 2% or less, or 1% or less, based on the initial weight of the curable composition, during the cure process.

In some embodiments that involve applying a layer of the curable composition to a substrate, one or more substrates may be treated prior to contact with the curable composition, using one or more of treatments such as, for example, corona discharge or coating with chemical primer. In other embodiments, the substrate is contacted with the curable composition of the present invention without prior treatment. The curable composition may be applied, for example, at a level of 0.2 to 5.8 $g/m^2$ (0.12 to 3.56 lb/ream).

In embodiments in which the curable composition will be used to bond substrates to each other, after a layer of the curable composition has been applied to a first substrate, the layer may then be contacted with another substrate to form a composite. The composite so formed is optionally subjected to applied pressure, such as passing it between rollers to effect increased contact of the substrates with the composition; such pressure is often applied before the cure reaction is substantially complete. In another embodiment of the invention, layers of the curable composition may be simultaneously or sequentially applied to both surfaces of a first substrate, which layers are then simultaneously or sequentially contacted with two further substrates, which may be the same, or different. It is further contemplated that the composite construction may sequentially be bonded to other substrate(s) using the curable composition of the invention, or a different composition before or after the process described herein. The first and second substrates to be bonded in the method of this invention may be the same or different and include, for example plastics, metallized plastics, metal, and paper, which may have smooth or structured surfaces.

Among embodiments in which the curable composition will be used to bond substrates to each other, in some of these embodiments, the composite will be heated above 23°C. The curable composition of the present invention is capable of cure at 23°C, but in some embodiments it is desirable to hasten or otherwise improve the cure process by heating the composite to temperature above 23°C. When such heating is performed, the composite may be heated to temperatures above 35°C, or above 50°C, or above 100°C. Also contemplated are embodiments in which the composite is maintained at temperature below 35°C during the cure process.

Among embodiments in which the curable composition will be used to bond substrates to each other, in some of these embodiments, most or all of the Michael addition reaction is completed before the curable composition is in contact with any substrate or while the is in contact with only one substrate.

In other embodiments in which the curable composition will be used to bond substrates to each other, a substantial part the Michael addition reaction takes place when the curable composition is in contact with at least two substrates. In some of such embodiments, at least 25 mole% of the Michael addition reactions that take place occur when the curable composition is in contact with at least two substrates; in other such embodiments, at least 50 mole%, or at least 75 mole%, or at least 90 mole% of the Michael addition reactions that take place occur when the curable

composition is in contact with at least two substrates.

According to another embodiment, the curable composition is a useful pressure sensitive adhesive composition. According to another embodiment, the curable composition is cured in contact with at least one substrate which contains a release coating. According to another embodiment, the cured curable composition has a Tg less than 50° C, including less than 30° C and less than 25° C, and is applied to a polymer film with or without using a solvent. A wide range of laminates are usefully prepared using polymer compositions and s curable composition of the invention. In some embodiments of the present invention, the substrates are relatively thin and flat, and the resulting composites are called laminates. Some examples of substrates for laminates are polyalkylenes, such as polyethylenes and polypropylenes, polyvinyl chloride, polyesters such as polyethylene terephthalate, polyamides (nylon), ethyl cellulose, cellulose acetate, metallized polypropylene, paper, aluminum foil, other metals, ceramic sheet materials, *etc.,* which may be provided in the form of rolls, sheets, films, foils *etc.* Further examples of substrates for laminates are woven or non-woven fabrics, which may be constructed of fibers using one or more natural or synthetic fibers made of materials such as, for example, cotton, wool, rayon, nylon, polyester, polyalkylene, glass, or ceramics.

An adhesive suitable for bonding substrates together to form a laminate is known herein as a "laminating adhesive."

In the practice of the present invention, substrates that may be bonded to each other by the curable composition of the present invention to form laminates may be the same as each other or different from each other.

The cured composition may be used for any of a wide variety of purposes. For example, the cured composition may be used as an elastomer, either bonded to a substrate or as an elastomeric article. For another example, the cured composition may be formed and cured under conditions that produce a foam. For a further example, a layer of the curable composition may be applied to a substrate and then left exposed to air to form a coating; such a coating may be continuous or discontinuous; it may be protective or decorative or both; it may function, for example, as a paint, as another type of coating, or as an ink. The use for curable composition may be, for example, as one or more of a gasket, a sealant, a roofing membrane, or a film.

The cured may be characterized by measuring its glass transition temperature (Tg). The glass transition temperature may be measured by Dynamic Mechanical Analysis (DMA) in flexural mode at 1 hertz (1 cycle/sec). The Tg is identified as the peak in the curve of tan delta versus temperature. The DMA test may be performed on the cured curable composition by itself, or the DMA test may be performed while the cured curable composition is in contact with other materials. For example, if the cured curable composition is in a layer between substrates in a composite, the entire composite may be tested in the DMA test; persons skilled in the art will readily know how to ignore any peaks in the curve of tan delta versus temperature that are due to substrates or to materials other than the cured composition. In some embodiments (herein called "multi-Tg" embodiments), the cured composition will have more than one peak in the curve of tan delta versus temperature.

The statement that a cured composition "has a Tg of " a certain value is to be understood herein to mean that the cured composition either has a sole Tg of that certain value or that the cured curable composition has multiple peaks in the curve of tan delta versus temperature, one of which has a peak of that certain value.

The cured curable composition of the present invention may have any of a wide range of Tg's. In some embodiments, the cured curable composition will have a Tg of -80°C or higher. Independently, in some embodiments, the cured curable composition will have a Tg of 120°C or lower. The Tg or multiple Tg's will be chosen to give the best properties that are desired for the intended use of the cured composition.

For example, when the cured composition is intended for use as a structural adhesive, the curable composition will usually be chosen so that the cured will have a Tg of 50°C or higher. As another example, when the cured composition is intended for use as a pressure-sensitive adhesive, the curable composition will usually be chosen so that the cured curable composition will have a Tg of 15°C or lower; or 0°C or lower; or -25°C or lower; or -50°C or lower. As yet another example, when the cured composition is intended for use as a laminating adhesive, the curable composition will usually be chosen so that the cured curable composition will have a Tg of -30°C or higher; or -15°C or higher; or -5°C or higher; or 15°C or higher; or 30°C or higher.

It is to be understood that for purposes of the present specification and claims that the range and ratio limits recited herein can be combined. For example, if ranges of 60 to 120 and 80 to 110 are recited for a particular parameter, it is understood that the ranges of 60 to 110 and 80 to 120 are also contemplated. Additionally, if minimum range values of 1 and 2 are recited, and if maximum range values of 3, 4, and 5 are recited, then the following ranges are all contemplated: 1 to 3, 1 to 4, 1 to 5, 2 to 3, 2 to 4, and 2 to 5.

## EXAMPLES

In the following Examples, these abbreviations and materials are used:

SR-259 = polyethylene glycol (200) diacrylate, from Sartomer Co.

CD-501 = propoxylated (6) trimethylol propane triacrylate, from Sartomer Co.
SR-306HP = tripropylene glycol diacrylate, from Sartomer Co.
Morcure™ 2000 = diacrylate of diglycidyl ether bisphenol-A, from Rohm and Haas Co.
EB-8402 = urethane diacrylate, from UCB Co.
SR-9003 = propoxylated (2) neopentyl glycol diacrylate, from Sartomer Co.
SR-610 = polyethylene glycol (600) diacrylate, from Sartomer Co.
IRR-214 = cycloaliphatic diacrylate, from UCB Co.
GF-19 = high slip low density polyethylene film, thickness 0.025mm (1 mil)
PET = corona treated polyethylene terephthalate, 92 gauge
OPP = corona treated oriented polypropylene, thickness 0.025mm (1 mil)
Al Foil = Aluminum foil, thickness 0.025 mm (1 mil)
LLDPE = linear low density polyethylene film, thickness 0.05 mm (2 mil)
Metalized OPP = metalized oriented polypropylene, thickness 0.025 mm (1 mil)

CONTINUOUS COATING PROCEDURE

The adhesive of example 1 was coated onto 92 gauge PET film (Dupont 92 LBT Mylar™) at 20 feet/minute using a Polytype lab coater/laminator. The coat weight of the adhesive was 1.5-2 pounds/ream of film.

Immediately following the coating station, a second 92 gauge PET film was continuously applied to the top of the adhesive coating and pressed into place with a nip roller. Hand prepared samples various substrates were optionally spliced into this second film, so that the effects of various treatments could be evaluated.

PROCEDURE FOR MONITORING EXTENT OF CURE IN LAMINATED FILM SAMPLES

A 30-40 $cm^2$ sample of laminated film was cut out and the two films separated. The two separate films were rolled into cylinders and inserted into a 1.5 ml vial. 0.9 ml of deuterochloroform containing 0.6 μl of acetic acid per 10 ml of deuterochloroform was added to the vial. (The acetic acid was added to suppress continued cure of the adhesive during analysis). The vial was capped, shaken for 5 minutes, and the liquid was pipetted into an NMR tube. An NMR spectrum of the sample was recorded on a Bruker 500 Ultrashield instrument. The concentration of acrylic olefin groups was monitored by comparing the integrated area of a peak at an offset of 5.9 ppm, to an invariant peak at an offset of 6.9 ppm which was used as an internal standard.

Relative acrylate remaining was calculated as area of 5.9 ppm peak divided by area of 6.9 ppm peak at a given time. % cure was calculated as 100% - 100*(relative acrylate at time t divided by relative acrylate at time zero).

PROCEDURE FOR MEASURING T-PEEL ADHESION

In the T-peel test, a layer of thermoset composition is applied to a first film. Any solvents or other volatile compounds present in the thermoset composition as substantially removed before, during or after application of the layer. Then, a second filom (of the same material as the first film, or a different material from the first film) is contacted with the layer of thermoset composition, aned the laminate so formed is pressed between nip rollers.

The laminate is stored under ambient conditions (20-25°C) for various durations prior to testing.

A strip of laminate of width 25 mm (1 inch) is cut, and the strip is peeled apart in a tensile tester at a speed of 4.2 mm/second (10 in/min). The t-peel result is recorded as the average load required to pull the strip apart.

EXAMPLE 1: PREPARATION OF THERMOSET COMPOSITIONS

Three thermoset compositions were prepared as follows: Trimethylol propane tris(acetoacetonate), Morecure 2000, Sartomer SR-259 and 70% potassium acetate in water were mixed vigorously by hand in the proportions specified in table 1.

| Sample | TMP tris(AcAc) | Morecure 2000 | SR-259 | 70% KOAc |
|---|---|---|---|---|
| 1A | 9.23 | 11.03 | 4.73 | 0.54 |
| 1B | 9.23 | 11.03 | 4.73 | 0.27 |
| 1C | 9.23 | 11.03 | 4.73 | 0.18 |
| 1D | 9.23 | 11.03 | 4.73 | 0 |

The mixtures were used immediately.

EXAMPLE 2: POT LIFE OF COMPOSITIONS

The compositions of example 1 were equilibrated at 35°C, and their viscosity was monitored using a Brookfield LVDVI viscometer. Spindle 25 was used, at 100 rpm. Initial viscosity and viscosity doubling time (potlife) of the compositions are given in the following table.

| Sample | Initial Viscosity (cps) | Pot Life (minutes) |
|---|---|---|
| 1A | 624 | 8.9 |
| 1B | 614 | 12.8 |
| 1C | 552 | 31 |
| 1D | 586 | > 1500 |

It is seen that decreasing the level of potassium acetate catalyst dramatically increases pot life.

EXAMPLE 3: ADDITION OF CATALYST TO INK

A sample of white ink (F-11 white from Color Converting Industries, 53.1% solids) was shaken to resuspend any sediment. A solution of 6% potassium acetate in n-propyl alcohol was added to sample of the ink, to give 3% potassium acetate based on ink solids. Aliquots of the original ink, and the ink with 3% potassium acetate were coated on 92 gauge PET film (Dupont 92LBT Mylar™) using a #4 wirewound rod, then dried for 4 minutes at 60°C in a forced air oven.

92 LBT PET film was coated with thermoset composition 1A using continuous coating, and laminated to the prepared ink films. Extent of cure of the adhesive in the laminates was monitored via NMR. Results are tabulated and graphed:

| hrs | unmodified control | ink with added catalyst |
|---|---|---|
| 0 | 0 | 0 |
| 1.0 | -2% | 14% |
| 3.7 | 8% | 32% |
| 5.0 | 6% | 27% |
| 21.2 | 8% | 53% |
| 29.0 | 7% | 53% |

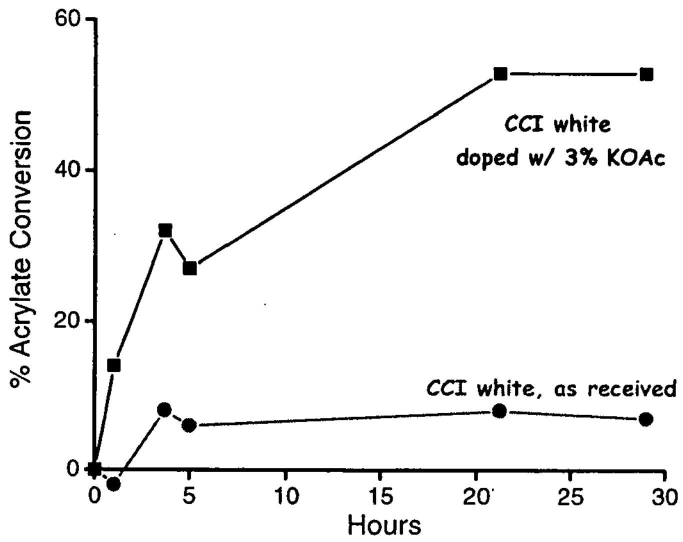


It is seen that adhesive in contact with the unmodified white ink showed very little cure over a 29 hour period. In contrast, adhesive in contact with the ink which incorporated potassium acetate as a catalyst showed much faster cure.

EXAMPLE 4: ADDITION OF ACID SCAVENGER TO INK

A sample of blue ink (F-11 cyan blue from Color Converting Industries, 29.3% solids) was shaken to re-suspend any sediment. An acid scavenger, triethanol amine, was added at a level of 4% based on ink solids to a sample of the mixed ink The treated and unmodified inks were coated on 92 gauge PET film (Dupont 92LBT Mylar™) using a #2.5 wire wound rod, then dried for 4 minutes at 60°C in a forced air oven. 92 LBT PET film was coated with thermoset composition 1A using continuous coating, and laminated to the prepared ink films. Extent of cure of the adhesive in the laminates was monitored via NMR. Results are tabulated and graphed:

| hours | unmodified control | acid scavenger |
|---|---|---|
| 0 | 0 | 0 |
| 1 | 9% | 12% |
| 2 | 12% | 20% |
| 4 | 11% | 32% |
| 27 | 18% | 57% |

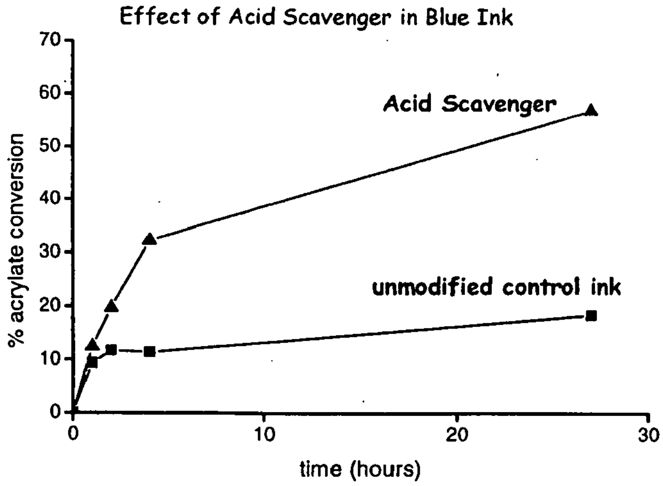


It is seen that the adhesive in contact with the ink containing an acid scavenger showed faster cure than the sample in contact with the unmodified control ink.

EXAMPLE 5: TREATMENT OF SUBSTRATE WITH CATALYST

A solution of 10% potassium hydroxide catalyst in water was prepared. 5 ml of this catalyst solution was pipetted onto a 5"x10" sheet of kraft paper, then spread with a #4 wire wound rod. The sheet was dried at 60°C for 10 minutes in a forced air oven. 5 ml of thermoset composition 1A or 1D were pipetted onto catalyst-treated or unmodified kraft paper sheets, then spread with a #4 wire wound rod. A sheet of PET (92 LBT) was rolled onto each adhesive coating, and the samples were allowed to age at room temperature for 18.5 hours. Samples were then evaluated by touch and t-peel adhesion. Results are summarized in the following table:

| formulation and substrate | tactile feel | t-peel adhesion (g/in) |
|---|---|---|
| 1A, unmodified kraft paper | oily liquid | 0 |
| 1A, catalyst treated kraft paper | dry solid | 74 |
| 1D, unmodified kraft paper | oily liquid | 0 |
| 1D, catalyst treated kraft paper | dry solid | 93 |

It is seen that unmodified kraft paper is not a suitable substrate for a Michael-cured thermoset composition. Treatment of the paper with catalyst is seen to render the substrate suitable for Michael-cure thermoset compositions such as formulation 1A.

It is further seen that treating the paper surface with catalyst allowed rapid cure and adhesion development even with composition 1D, a formulation which itself contained no reaction promoter, and which showed pot life longer than the cure time.

Example 6: Priming of substrate with polymeric catalyst. Rhoplex ASE-95 alkali soluble emulsion was diluted to 5% solids, then neutralized to pH 13 with 45% potassium hydroxide solution. The neutralized polymer is believed to be a polymeric weak base catalyst.

A volume of 5 ml of the polymeric weak base catalyst solution was pipetted onto a 5"x10" sheet of PET (92 LBT, Dupont). The sheet was dried at 60°C for 10 minutes in a forced air oven.

92 LBT PET film was coated with thermoset composition 1A using continuous coating, and laminated to either unmodified PET sheets, or PET sheets primed with the polymeric weak base catalyst. Samples were allowed to age at room temperature for 22 hours, then evaluated by touch and t-peel adhesion. Results are summarized in the following table:

| Sample | tactile feel | t-peel adhesion (g/in) |
|---|---|---|
| unmodified PET | oily liquid | 4 |

Table continued

| Sample | tactile feel | t-peel adhesion (g/in) |
|---|---|---|
| catalyst primed PET | dry solid | 42 |

It is seen that priming the surface of the PET substrate with polymeric weak base catalyst gave more rapid cure than unmodified PET.

EXAMPLE 7: INHERENTLY CATALYTIC SUBSTRATE

A piece of glass (Kodak Projector Slide Cover Glass, 3.25"x4", catalog number 140 2130) was washed with soapy water, rinsed with DI water, then dried it for 10 minutes at 60°C.

2 ml of thermoset composition 1D were pipetted onto either the piece of glass or PET film (92 LBT, Dupont), then spread with a #2.5 wire wound rod. The coated samples were allowed to stand uncovered for xx hours at room temperature. Samples were then evaluated by touch.

It is seen that the glass surface is able to catalyze cure of a thermoset composition with no reaction promoting ingredients.

## Claims

**1.** A or curable composition comprising:

(a) at least one multi-functional Michael donor;
(b) at least one multi-functional Michael acceptor; and
(c) and at least one reaction promoter,
wherein at least a portion of the reaction promoter is present on at least one surface to which compositions are applied.

**2.** A curable composition of claim 1 wherein the reaction promoter is contained within a primer or an ink or alternatively the primer or ink is inherently a reaction promoter.

**3.** A curable composition comprising:

(a) at least one multi-functional Michael donor;
(b) at least one multi-functional Michael acceptor; and
(c) and at least one reaction promoter,
wherein the at least one reaction promoter is selected from the group consisting of: atleast one catalyst, co-catalyst and acid scavenger.

**4.** A laminate comprising: at least two substrates in contact with the reaction product of (a) at least one multi-functional Michael donor and (b) at least one multi-functional Michael acceptor, wherein at least one reaction promoter is present on the surface of least one of the substrates prior to lamination.

**5.** A laminate according to claim 4 wherein the reaction promoter is contained within a primer or an ink or alternatively the primer or ink is inherently a reaction promoter.

**6.** An article wherein at least a portion of its surface is in contact with a reaction product of (a) at least one multi-functional Michael donor and (b) at least one multi-functional Michael acceptor, wherein a reaction promoter is present on the surface prior to the reaction of (a) and (b)

**7.** The article of claim 6, wherein the reaction promoter is contained within a primer or an ink or alternatively the primer or ink is inherently a reaction promoter

**8.** A substrate comprising: at least one reaction promoter included into the substrate during manufacture of the substrate, or coating the substrate with a mixture including at least one reaction promoter, or by subjecting the substrate to at least one process that generates or includes a reaction promoter on its surface.

**9.** A substrate according to claim 8 wherein the reaction promoter is included within a primer or an ink or alternatively the primer or ink is inherently a reaction promoter.

**10.** An ink, primer, or coating for substrates which comprises at least one reaction promoter for curing a Michael reaction according to claim 1.

**11.** An ink, primer, or coating for substrates which comprises at least one reaction promoter which promotes or catalyzes the reaction of a Michael donor and acceptor.

**12.** An ink, primer or coating which comprises at least one co-catalyst for the reaction of a Michael donor and acceptor.

**13.** An ink, primer, or coating for substrates which comprises at least one acid scavenger.